(19) Europäisches Patentamt
European Patent Office
Office européen des brevets

(11) **EP 4 787 838 A1**

(12) **EUROPEAN PATENT APPLICATION**
published in accordance with Art. 153(4) EPC

(43) Date of publication:
**05.08.2026 Bulletin 2026/32**

(51) International Patent Classification (IPC):
**H04N 19/124** *(2014.01)*   **H04N 19/176** *(2014.01)*
**H04N 19/463** *(2014.01)*

(21) Application number: **24871546.8**

(52) Cooperative Patent Classification (CPC):
**H04N 19/124; H04N 19/176; H04N 19/463**

(22) Date of filing: **09.08.2024**

(86) International application number:
**PCT/JP2024/028745**

(87) International publication number:
**WO 2025/069744 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023   JP 2023168873**

(71) Applicant: **Canon Kabushiki Kaisha
Tokyo 146-8501 (JP)**

(72) Inventor: **SHIMA, Masato
Tokyo 146-8501 (JP)**

(74) Representative: **Canon Europe Limited
European Intellectual Property Group
4 Roundwood Avenue
Stockley Park
Uxbridge UB11 1AF (GB)**

(54) **IMAGE ENCODING DEVICE, IMAGE ENCODING METHOD, IMAGE DECODING DEVICE, IMAGE DECODING METHOD, AND COMPUTER PROGRAM**

(57)   A prediction image is generated from encoded pixels for a block of interest having a predetermined size as an encoding target in an image, prediction errors that are a difference between the block of interest and the prediction image is derived, the prediction errors are frequency-transformed, and orthogonal transformation coefficients obtained by the frequency transformation is quantized. Then, the quantized orthogonal transformation coefficients are entropy-encoded, and reproduction orthogonal transformation coefficients are generated by inversely quantizing the quantized orthogonal transformation coefficients. The reproduction orthogonal transformation coefficients are corrected.

**F I G.  1**

**Description**

TECHNICAL FIELD

The present invention relates to an image encoding apparatus, an image encoding method, an image decoding apparatus, an image decoding method, and a computer program.

BACKGROUND ART

As an encoding method for compression recording of a moving image, a VVC (Versatile Video Coding) encoding method (to be referred to as VVC hereinafter) is known. In the VVC, to improve the encoding efficiency, a basic block having a size of 128 pixels × 128 pixels at maximum is divided into sub-blocks which have not only a conventional square shape but also a rectangular shape.

In addition, in the VVC, processing of weighting coefficients (to be referred to as orthogonal transformation coefficients hereinafter) after orthogonal transformation by using a quantization matrix in accordance with a frequency component is used. Data of a high frequency component whose degradation is unnoticeable to human vision is reduced, thereby making it possible to increase the compression efficiency while maintaining image quality. PTL 1 discloses a technique of encoding such a quantization matrix.

In recent years, in JVET (Joint Video Experts Team), which standardized the VVC, a technique for implementing a better compression efficiency than the VVC has been examined. To improve the encoding efficiency, a new inverse quantization method (to be referred to as inverse quantization correction hereinafter) of adding a correction value to orthogonal transformation coefficients (to be referred to as reproduction orthogonal transformation coefficients hereinafter) generated by inverse quantization processing has been examined.

CITATION LIST

PATENT LITERATURE

PTL 1: Japanese Patent Laid-Open No. 2013-38758

SUMMARY OF INVENTION

TECHNICAL PROBLEM

This inverse quantization correction is processing of adding a correction value to reproduction orthogonal transformation coefficients, and is processing of adding a predetermined correction value regardless of whether a quantization matrix is used or not. Therefore, it is impossible to perform processing of adding an appropriate correction value to reproduction orthogonal transformation coefficients generated by inverse quantization processing using a quantization matrix, and the compression efficiency cannot be improved.

The present invention provides a technique for improving the compression efficiency by enabling control to allow an appropriate correction value to be added even to reproduction orthogonal transformation coefficients generated by inverse quantization processing using a quantization matrix.

SOLUTION TO PROBLEM

According to one aspect of the present invention, there is provided an image encoding apparatus for encoding an image on a block basis, characterized by comprising prediction means for generating a prediction image from encoded pixels for a block of interest having a predetermined size as an encoding target in an image, and deriving prediction errors that are a difference between the block of interest and the prediction image, transformation means for frequency-transforming the prediction errors derived by the prediction means, quantization means for quantizing orthogonal transformation coefficients obtained by the frequency transformation by the transformation means, encoding means for entropy-encoding the orthogonal transformation coefficients quantized by the quantization means, and inverse quantization means for generating reproduction orthogonal transformation coefficients by inversely quantizing the orthogonal transformation coefficients quantized by the quantization means, wherein the inverse quantization means corrects the reproduction orthogonal transformation coefficients.

ADVANTAGEOUS EFFECTS OF INVENTION

According to the present invention, it is possible to provide a technique for improving the compression efficiency by enabling control to allow an appropriate correction value to be added even to reproduction orthogonal transformation coefficients generated by inverse quantization processing using a quantization matrix.

Other features and advantages of the present invention will be apparent from the following description taken in conjunction with the accompanying drawings. Note that the same reference numerals denote the same or like components throughout the accompanying drawings.

BRIEF DESCRIPTION OF DRAWINGS

The accompanying drawings, which are incorporated in and constitute a part of the specification, illustrate embodiments of the invention and, together with the description, serve to explain principles of the invention.

Fig. 1 is a block diagram showing an example of the functional configuration of an image encoding apparatus;
Fig. 2 is a block diagram showing an example of the functional configuration of an image decoding apparatus;
Fig. 3 is a flowchart of processing performed by the image encoding apparatus to encode an input image of one frame;
Fig. 4 is a flowchart of processing performed by an image decoding apparatus to decode a bit stream of one frame;
Fig. 5 is a block diagram showing an example of the hardware configuration of a computer apparatus applicable to an image encoding apparatus or an image decoding apparatus;
Fig. 6A is a view showing an example of the data structure of a bit stream;
Fig. 6B is a view showing an example of the data structure of a bit stream;
Fig. 7A is a view showing an example of a sub-block division pattern;
Fig. 7B is a view showing an example of a sub-block division pattern;
Fig. 7C is a view showing an example of a sub-block division pattern;
Fig. 7D is a view showing an example of a sub-block division pattern;
Fig. 7E is a view showing an example of a sub-block division pattern;
Fig. 7F is a view showing an example of a sub-block division pattern;
Fig. 8A is a view showing an example of the configuration of a quantization matrix 800;
Fig. 8B is a view showing an example of the configuration of the quantization matrix 800;
Fig. 8C is a view showing an example of the configuration of the quantization matrix 800;
Fig. 9 is a view showing a scanning method;
Fig. 10A is a view showing an example of the configuration of a one-dimensional difference matrix;
Fig. 10B is a view showing an example of the configuration of a one-dimensional difference matrix;
Fig. 10C is a view showing an example of the configuration of a one-dimensional difference matrix;
Fig. 11A is a view showing an example of the structure of an encoding table;
Fig. 11B is a view showing an example of the structure of an encoding table;
Fig. 12A is a view showing an example of region division used in mixed intra-inter prediction; and
Fig. 12B is a view showing an example of region division used in mixed intra-inter prediction.

DESCRIPTION OF EMBODIMENTS

Hereinafter, embodiments will be described in detail with reference to the attached drawings. Note, the following embodiments are not intended to limit the claimed invention. Multiple features are described in the embodiments, but limitation is not made to an invention that requires all of these features, and multiple such features may be combined as appropriate. Furthermore, in the attached drawings, the same reference numerals are given to the same or similar configurations, and redundant description thereof is omitted.

[First Embodiment]

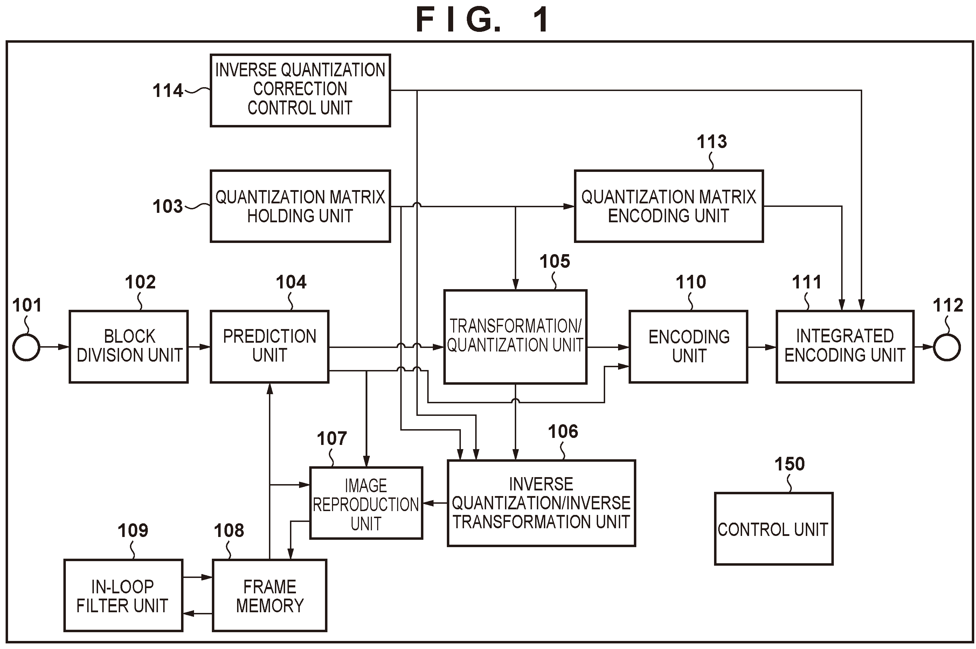

An example of the functional configuration of an image encoding apparatus according to this embodiment will be described first with reference to the block diagram of Fig. 1. A PC (Personal Computer), a smartphone, a tablet terminal apparatus, an image capturing apparatus, an image processing-dedicated circuit, or the like can be applied to the image encoding apparatus.

The image encoding apparatus acquires an encoding target image as an input image via an input unit 101. A method of acquiring an input image by the image encoding apparatus is not limited to a specific one. For example, the image encoding apparatus may acquire, as an input image, an image output from an image capturing apparatus (an image of each frame in a moving image, a still image captured periodically or nonperiodically, or the like). Note that if the image encoding apparatus and the image capturing apparatus are integrated, the image encoding apparatus acquires, as an input image, an image captured by the image capturing apparatus of itself. Alternatively, for example, the image encoding apparatus may acquire, as an input image, an image held in an external apparatus such as a server apparatus via a network such as a LAN or the Internet. Alternatively, for example, the image encoding apparatus may acquire, as an input image, an image held in its own storage device.

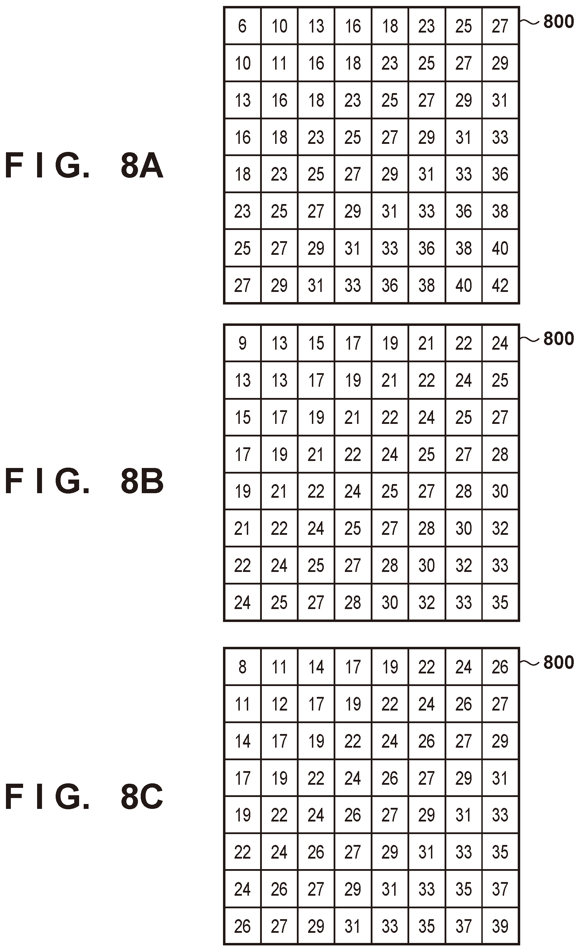

A block division unit 102 divides an input image into a plurality of basic blocks (to be also simply referred to as blocks hereinafter as appropriate). A quantization matrix holding unit 103 acquires a plurality of quantization matrices to be used for quantization processing and holds them. A method of acquiring a quantization matrix by the quantization matrix holding unit 103 is not limited to a specific one. For example, the quantization matrix holding unit 103 may acquire a quantization matrix input by the user operating an operation unit (not shown), calculate a quantization matrix from the characteristic of the input image, or acquire a quantization matrix designated in advance as an initial value. In this embodiment, the quantization matrix holding unit 103 acquires three types of "two-dimensional quantization matrices 800 corresponding to orthogonal transformation (frequency transformation) of 8 pixels $\times$ 8 pixels" exemplified in Figs. 8A to 8C and holds them.

An inverse quantization correction control unit 114 acquires inverse quantization correction control information that is information for controlling inverse quantization correction processing executed by an inverse quantization/inverse transformation unit 106 of the succeeding stage. A method of acquiring inverse quantization correction control information by the inverse quantization correction control unit 114 is not limited to a specific one. For example, the inverse quantization correction control unit 114 may acquire inverse quantization correction control information input by the user operating an operation unit (not shown), or calculate inverse quantization correction control information based on the characteristic of the input image. Alternatively, for example, the inverse quantization correction control unit 114 may acquire inverse quantization correction control information preset as an initial value from a memory inside or outside the image encoding apparatus.

For each of the basic blocks divided by the block division unit 102, a prediction unit 104 divides the basic block into one or more sub-blocks, generates a prediction image corresponding to the sub-block by performing, for the sub-block, prediction processing such as intra-prediction as intra-frame prediction or inter-prediction as inter-frame prediction, and derives the difference (error) between the sub-block and the prediction image as prediction errors. In addition, the prediction unit 104 outputs information necessary for prediction (for example, information representing sub-block division, a prediction mode, and a motion vector or the like) as prediction information.

A transformation/quantization unit 105 generates orthogonal transformation coefficients corresponding to the sub-block by performing orthogonal transformation (frequency transformation) of the prediction errors corresponding to the sub-block, and generates a quantization coefficient by quantizing the orthogonal transformation coefficients using the quantization matrix held by the quantization matrix holding unit 103. Note that as an example, a component for performing orthogonal transformation and a component for performing quantization are represented by one block. However, a component for performing orthogonal transformation and a component for performing quantization may be separated.

An inverse quantization/inverse transformation unit 106 generates reproduction orthogonal transformation coefficients by inversely quantizing the quantization coefficient generated by the transformation/quantization unit 105 using the quantization matrix held by the quantization matrix holding unit 103. Then, the inverse quantization/inverse transformation unit 106 corrects the generated reproduction orthogonal transformation coefficients based on the inverse quantization correction control information acquired by the inverse quantization correction control unit 114, and performs inverse orthogonal transformation of the corrected reproduction orthogonal transformation coefficients, thereby generating (reproducing) prediction errors. Note that as an example, a component for performing inverse quantization and a component for performing inverse orthogonal transformation are represented by one block. However, a component for performing inverse quantization and a component for performing inverse transformation may be separated.

An image reproduction unit 107 generates a prediction image based on the prediction information output from the prediction unit 104 by appropriately referring to a frame memory 108, generates a reproduced image from the prediction image and the prediction errors generated (reproduced) by the inverse quantization/inverse transformation unit 106, and stores the reproduced image in the frame memory 108.

An in-loop filter unit 109 performs in-loop filter processing such as a deblocking filter or sample adaptive offset for the reproduced image stored in the frame memory 108.

An encoding unit 110 generates encoded data by encoding the quantization coefficient generated by the transformation/quantization unit 105 and the prediction information output from the prediction unit 104. A quantization matrix encoding unit 113 generates encoded data by encoding the quantization matrix held by the quantization matrix holding unit 103.

An integrated encoding unit 111 generates header encoded data using header information necessary for encoding of image data such as the inverse quantization correction control information acquired by the inverse quantization correction control unit 114, and the encoded data generated by the quantization matrix encoding unit 113. Furthermore, the integrated encoding unit 111 generates a bit stream by combining the encoded data generated by the encoding unit 110 with the generated header encoded data, and outputs the generated bit stream to the outside via an output unit 112. Note that the output destination of the bit stream is not limited to a specific one. For example, the integrated encoding unit 111 may output (transmit) the bit stream to an external apparatus (for example, a memory device or a server apparatus) via the output unit 112 or store the bit stream in a memory in the image encoding apparatus. A control unit 150 controls the operation of the entire image encoding apparatus including the above-described function units.

The operation of the image encoding apparatus in the functional configuration shown in Fig. 1 will be described next. The inverse quantization correction control unit 114 acquires inverse quantization correction control information. The relationship between the value of the inverse quantization correction control information and inverse quantization correction processing will be described later.

The quantization matrix holding unit 103 acquires a plurality of quantization matrices and holds them, and a quantization matrix is generated in accordance with the size of a sub-block or the type of a prediction method. This embodiment assumes that the quantization matrix holding unit 103 generates the quantization matrix 800 having a size of 8 pixels × 8 pixels corresponding to the sub-block having a size of 8 pixels × 8 pixels shown in each of Figs. 8A to 8C, as described above.

The quantization matrix 800 shown in Fig. 8A shows an example of a quantization matrix corresponding to intra-prediction. The quantization matrix 800 shown in Fig. 8B shows an example of a quantization matrix corresponding to inter-prediction. The quantization matrix 800 shown in Fig. 8C shows an example of a quantization matrix corresponding to mixed intra-inter prediction. As shown in Fig. 8, the quantization matrix is formed by 8 × 8 elements (quantization step values). This embodiment will describe a case where the three types of quantization matrices shown in Figs. 8A to 8C are held as two-dimensional arrays in the quantization matrix holding unit 103 but each element in the quantization matrix are not limited to these. In addition, a plurality of quantization matrices can be held in correspondence with the same prediction method depending on the size of the sub-block or whether the encoding target is a luminance block or a color difference block. In general, since the quantization matrix implements quantization processing according to the human visual characteristic, as shown in Figs. 8A to 8C, elements for DC components corresponding to the upper left corner portion of the quantization matrix are small, and elements for AC components corresponding to the lower right portion are large.

The generated quantization matrix is not limited to this. For example, a quantization matrix corresponding to the shape of the sub-block such as 4 pixels × 8 pixels, 8 pixels × 4 pixels, or 4 pixels × 4 pixels may be generated. A method of deciding each element in the quantization matrix is not particularly limited. For example, a predetermined initial value may be used for each element in the quantization matrix, or each element in the quantization matrix may individually be set or may be generated in accordance with the characteristic of the image.

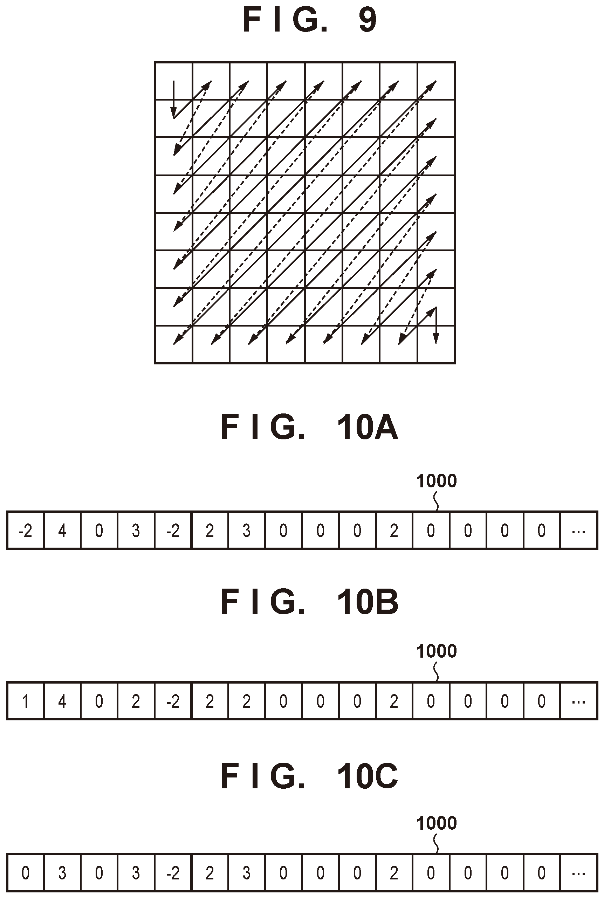

The quantization matrix encoding unit 113 sequentially reads out the quantization matrices held as two-dimensional arrays by the quantization matrix holding unit 103, calculates the differences by scanning the respective elements in the quantization matrix, and arranges them in a one-dimensional matrix (difference matrix). In this embodiment, a scanning method of scanning the elements in the quantization matrix 800 shown in each of Figs. 8A to 8C in an order indicated by arrows in Fig. 9 is used to calculate, for each element, the difference from the previous element in the scanning order. For example, the quantization matrix 800 having a size of 8 pixels × 8 pixels shown in Fig. 8C is scanned by the scanning method shown in Fig. 9. After the first element "8" at the upper left corner, an element "11" located immediately below the first element is scanned, and a difference "+3" is calculated. Assume here that the difference from the first element (in the example shown in Fig. 8C, a predetermined initial value (for example, "8") is used for encoding of "8" in the quantization matrix is calculated. However, the present invention is not limited to this, as a matter of course, and the difference from an arbitrary value or the value of the first element may be used.

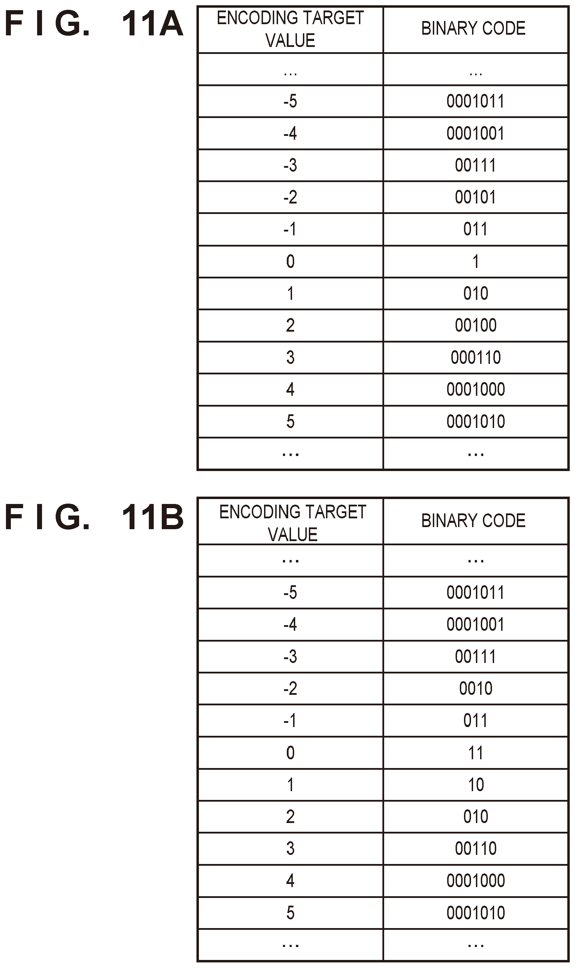

As described above, in this embodiment, with respect to the quantization matrices 800 shown in Figs. 8A to 8C, one-dimensional difference matrices 1000 shown in Figs. 10A to 10C are generated using the scanning method shown in Fig. 9, respectively. The quantization matrix encoding unit 113 further encodes the difference matrices, thereby generating quantization matrix encoded data. In this embodiment, encoding is performed using an encoding table shown in Fig. 11A. However, the encoding table is not limited to this, and, for example, an encoding table shown in Fig. 11B may be used.

Referring back to Fig. 1, the integrated encoding unit 111 integrates the quantization matrix encoded data with the header information necessary for encoding of the image including the inverse quantization correction control information, thereby generating header encoded data. Subsequently, encoding of the image will be described.

The block division unit 102 divides an input image input via the input unit 101 into a plurality of basic blocks. In this embodiment, the size of a basic block is 8 pixels × 8 pixels. The prediction unit 104 executes prediction processing for each basic block. More specifically, first, the prediction unit 104 decides a sub-block dividing method as a method of dividing the basic block into finer sub-blocks, and further decides a prediction mode such as intra-prediction, inter-prediction, or mixed intra-inter prediction on a sub-block basis.

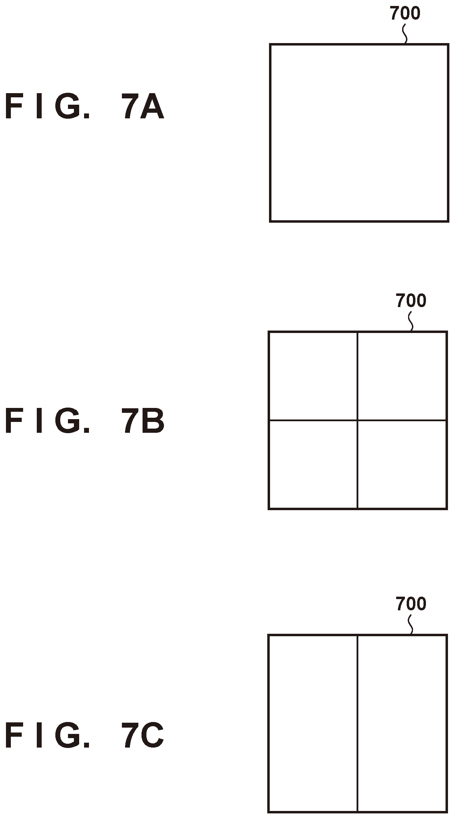

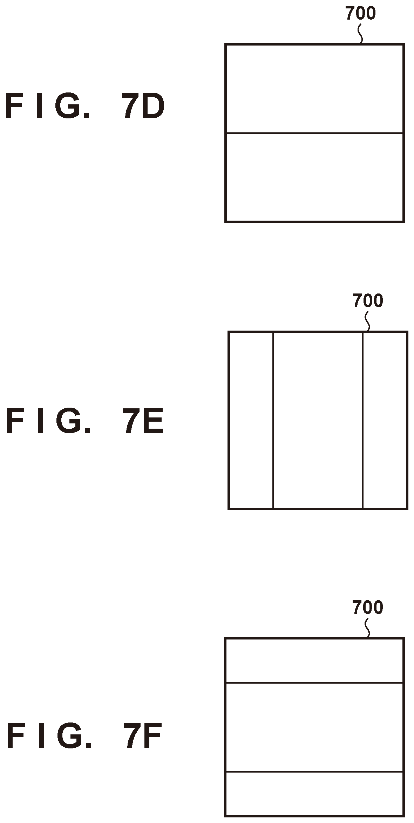

Figs. 7A to 7F show examples of sub-block division patterns. A thick frame 700 on the outer side in Fig. 7 represents a basic block, and has a size of 8 pixels × 8 pixels in this embodiment. The rectangle in the thick frame 700 represents a sub-block. Fig. 7A shows an example of basic block = sub-block. Fig. 7B shows an example of conventional square sub-block division, and the basic block having a size of 8 pixels × 8 pixels is divided into four sub-blocks each having a size of 4 pixels × 4 pixels. Figs. 7C to 7F show examples of rectangular sub-block division. In Fig. 7C, the basic block is divided into two vertically long sub-blocks each having a size of 4 pixels × 8 pixels. In Fig. 7D, the basic block is divided into two horizontally long rectangular sub-blocks each having a size of 8 pixels × 4 pixels. In Figs. 7E and 7F, the basic block is divided into rectangular sub-blocks at a ratio of 1 : 2 : 1. As described above, encoding processing is performed using not only square sub-blocks but also rectangular sub-blocks.

In this embodiment, for the sake of descriptive simplicity, the sub-block division method (Fig. 7A) in which the basic block of 8 pixels × 8 pixels is not divided into sub-blocks is employed. However, quadtree division as shown in Fig. 7B, ternary tree division as shown in Fig. 7E or 7F, or binary tree division as shown in Fig. 7C or 7D may be used. If sub-block division other than that shown in Fig. 7A is used, the quantization matrix holding unit 103 generates a quantization matrix corresponding to each sub-block to be used. The generated quantization matrix is encoded by the quantization matrix encoding unit 113.

A prediction mode (prediction method) used in this embodiment will be described anew. In this embodiment, three types of prediction methods, that is, intra-prediction, inter-prediction, and mixed intra-inter prediction are used. In intra-prediction, using encoded pixels spatially located around an encoding target block, prediction pixels of the encoding target block are generated, and an intra-prediction mode representing an intra-prediction method such as horizontal prediction, vertical prediction, or DC prediction is also generated. In inter-prediction, using encoded pixels of a frame temporally different from the encoding target block, prediction pixels of the encoding target block are generated, and motion information representing a frame to be referred to, a motion vector, and the like is also generated.

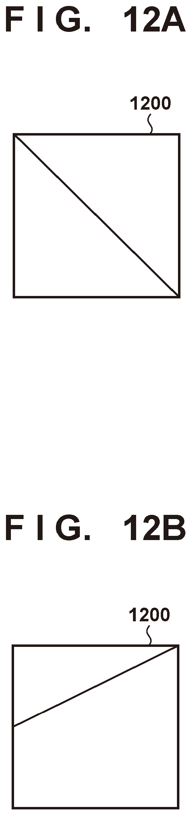

In mixed intra-inter prediction, first, the encoding target block is divided by a line segment in an oblique direction, thereby generating two regions. The pixel values generated by intra-prediction described above are used for one of the two regions, and the pixel values generated by inter-prediction described above are used for the other region, thereby generating prediction pixels of the encoding target block. Figs. 12A and 12B show examples of region division used in mixed intra-inter prediction. Fig. 12A shows an example in a case where from an encoding target block 1200, by a diagonal line from an upper left vertex to a lower right vertex, two regions are generated. For example, the pixel values generated by intra-prediction can be used for the upper right region, and the pixel values generated by inter-prediction can be used for the lower left region. Fig. 12B shows an example in a case where from the encoding target block 1200, by a line segment in an oblique direction from an upper right vertex to a middle point between an upper left vertex and a lower left vertex, two regions are generated. For example, the pixel values generated by intra-prediction can be arranged in the upper left region and the pixel values generated by inter-prediction can be arranged in the lower right region. As described above, in the mixed intra-inter prediction, the prediction pixels of the encoding target block are generated, and the intra-prediction mode, motion information, and information concerning region division used to generate the prediction pixels is also generated.

The prediction unit 104 generates a prediction image of the encoding target sub-block from the decided prediction mode and the encoded pixels. Then, the prediction unit 104 calculates the difference (error) between the encoding target sub-block and the prediction image of the sub-block, thereby generating prediction errors. The prediction unit 104 also outputs prediction information such as a sub-block division method, a prediction mode (information representing which one of intra-prediction, inter-prediction, and mixed intra-inter prediction is used), and vector data.

The transformation/quantization unit 105 generates a quantization coefficient by performing orthogonal transformation and quantization for the prediction errors. More specifically, the transformation/quantization unit 105 generates orthogonal transformation coefficients by performing orthogonal transformation processing corresponding to the size of the prediction errors. Next, the transformation/quantization unit 105 selects a quantization matrix corresponding to the prediction mode among the quantization matrices held by the quantization matrix holding unit 103, and quantizes the orthogonal transformation coefficients using the selected quantization matrix, thereby generating a quantization coefficient. In this embodiment, the quantization matrix shown in Fig. 8A is selected for quantization of the orthogonal transformation coefficients of the sub-block having undergone prediction processing by intra-prediction, and the quantization matrix shown in Fig. 8B is selected for quantization of the orthogonal transformation coefficients of the sub-block having undergone inter-prediction. Furthermore, in this embodiment, the quantization matrix shown in Fig. 8C is selected for quantization of the orthogonal transformation coefficients of the sub-block having undergone mixed intra-inter prediction. However, the quantization matrix to be used is not limited to these.

The inverse quantization/inverse transformation unit 106 generates reproduction orthogonal transformation coefficients by inversely quantizing the quantization coefficient of the sub-block using the quantization matrix used for quantization of the orthogonal transformation coefficients of the sub-block among the quantization matrices stored in the quantization matrix holding unit 103. Then, the inverse quantization/inverse transformation unit 106 performs inverse quantization correction processing for the reproduction orthogonal transformation coefficients based on the inverse quantization correction control information.

The inverse quantization correction processing according to this embodiment will now be described. The inverse quantization processing and the inverse quantization correction processing according to this embodiment are performed using equation (1) below, for example.

$$dz[x][y] = L[x][y] \times Q[x][y] + Shift \qquad\qquad ...(1)$$

wherein, in the equation (1), $dz[x][y]$ represents a corrected reproduction orthogonal transformation coefficient corresponding to a position $(x, y)$, and $L[x][y]$ represents a quantization coefficient corresponding to the position $(x, y)$. In addition, $Q[x][y]$ represents "a quantization scale calculated in consideration of the elements of the quantization matrix" corresponding to the position $(x, y)$. Shift represents a correction value used for the inverse quantization correction processing of this embodiment, and is decided based on the quantization coefficient L and the inverse quantization correction control information. More specifically, if the value of the inverse quantization correction control information is 0, the inverse quantization/inverse transformation unit 106 sets 0 in the value of Shift in equation (1). In this case, in the inverse quantization correction processing, correction of the reproduction orthogonal transformation coefficients is not substantially performed. On the other hand, if the value of the inverse quantization correction control information is 1, the inverse quantization/inverse transformation unit 106 derives the value of Shift in equation (1) using equation (2) below.

$$Shift = T \times L[x][y] \qquad\qquad ...(2)$$

Where, in the equation (2), T represents a real number taking a value of 0 (inclusive) to 1 (exclusive). This embodiment assumes that T is a fixed value but is not limited to this and may take a variable value depending on the position $(x, y)$ or may be calculated using the quantization coefficient $L[x][y]$. For example, the value of T may be calculated in accordance with the absolute value $(|L[x][y]|)$ of the quantization coefficient $L[x][y]$, as indicated in a table below.

[Table 1]

| $\|L[x][y]\|$ | 0 | 1 | 2 | 3 | 4 | 5 | 6 | ... |
|---|---|---|---|---|---|---|---|---|
| T | 0 | 63/1024 | 31/1024 | 21/1024 | 15/1024 | 12/1024 | 10/1024 | ... |

In this case, if the quantization coefficient $L[x][y]$ is 0, the value of T is also 0, and correction is not substantially performed. In addition, as the absolute value $(|L[x][y]|)$ of the non-zero quantization coefficient $L[x][y]$ increases, the value of T decreases. When $|L[x][y]|$ becomes larger than a predetermined value, the value of T becomes 0, and correction is not substantially performed.

Then, the inverse quantization/inverse transformation unit 106 generates (reproduces) prediction errors by performing inverse orthogonal transformation of the reproduction orthogonal transformation coefficients generated using equation (1) above. In the inverse quantization processing, like the transformation/quantization unit 105, the quantization matrix corresponding to the prediction mode of the encoding target block is used. More specifically, the same quantization matrix as that used by the transformation/quantization unit 105 is used.

The image reproduction unit 107 generates (reproduces) a prediction image based on the prediction information input from the prediction unit 104 by appropriately referring to the frame memory 108. Then, the image reproduction unit 107 generates (reproduces) a reproduced image of a corresponding sub-block by adding the reproduced prediction image and the prediction errors generated (reproduced) by the inverse quantization/inverse transformation unit 106, and stores the generated reproduced image in the frame memory 108.

The in-loop filter unit 109 reads out the reproduced image from the frame memory 108, and performs in-loop filter processing of the readout reproduced image using a filter such as a deblocking filter. Then, the in-loop filter unit 109 stores again the reproduced image applied with the in-loop filter processing in the frame memory 108.

The encoding unit 110 generates encoded data for each sub-block by entropy-encoding the quantization coefficient of the sub-block generated by the transformation/quantization unit 105 and the prediction information of the sub-block input from the prediction unit 104. The method of entropy encoding is not limited to a specific one, and Golomb encoding, arithmetic encoding, Huffman encoding, or the like can be used.

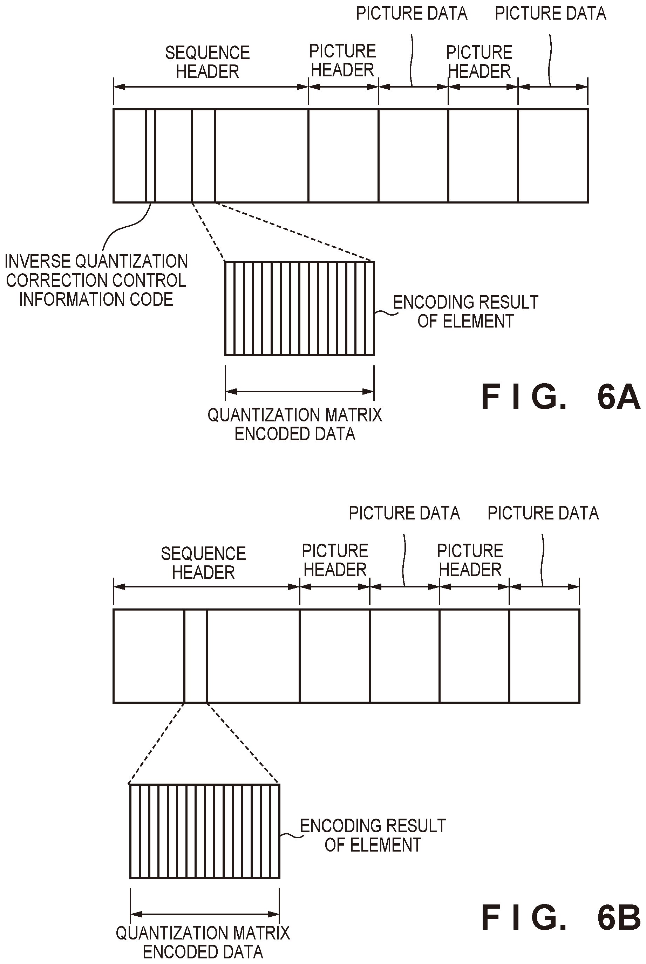

The integrated encoding unit 111 generates a bit stream by multiplexing encoded data, and outputs the generated bit stream. Fig. 6A shows an example of the data structure of the output bit stream according to this embodiment. A sequence header includes the inverse quantization correction control information and the quantization matrix encoded data, and is formed by the encoded data of each element. However, the position to encode is not limited to this, and the data may be encoded in a picture header or another header. If the inverse quantization correction control information or the quantization matrix is to be changed in one sequence, the inverse quantization correction control information or the quantization matrix can be updated by newly encoding it.

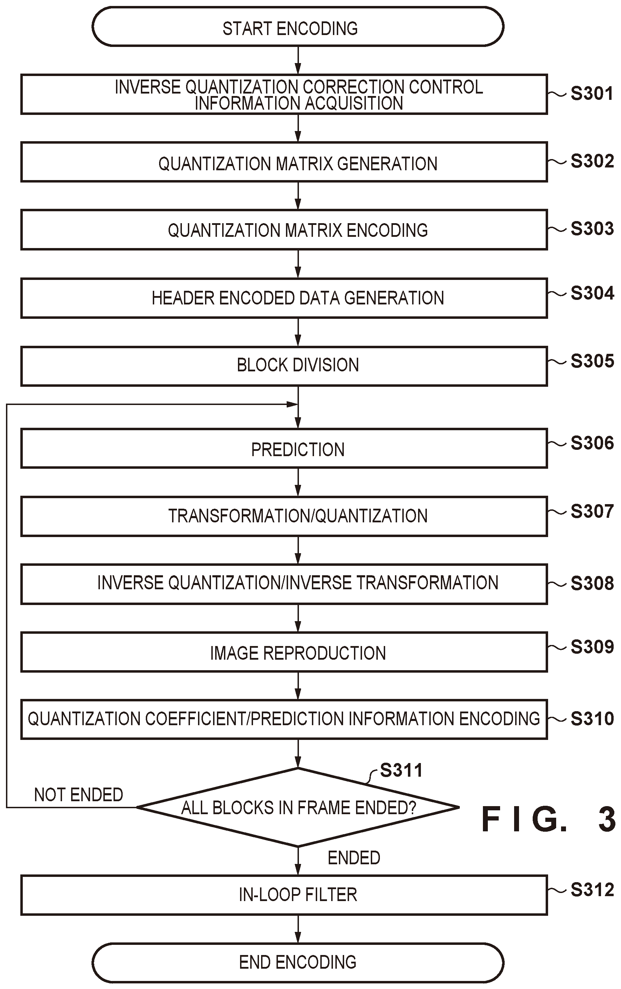

Processing performed by the image encoding apparatus to encode an input image of one frame will be described next with reference to the flowchart of Fig. 3. If the image encoding apparatus encodes input images of a plurality of frames, it performs the processes of steps S305 to S312 for the input image of each frame.

First, prior to encoding of an image, in step S301, the inverse quantization correction control unit 114 acquires inverse quantization correction control information. In step S302, the quantization matrix holding unit 103 acquires a plurality of quantization matrices to be used for quantization processing and holds them.

In step S303, the quantization matrix encoding unit 113 scans the quantization matrices generated in step S302 to calculate the differences between the elements and generates one-dimensional difference matrices. In step S304, the integrated encoding unit 111 generates header encoded data using header information necessary for encoding of image data such as the inverse quantization correction control information acquired in step S301, and the quantization matrix encoded data generated in step S303.

In step S305, the block division unit 102 divides an input image input via the input unit 101 into a plurality of basic blocks. In step S306, the prediction unit 104 selects, as a selected basic block, an unselected one among basic blocks divided in step S305. Then, the prediction unit 104 divides the selected basic block into sub-blocks (including a case of selected basic block = sub-block), derives the prediction errors of each sub-block, and outputs prediction information.

Note that a detailed example of processing by the prediction unit 104 is as follows. The prediction unit 104 performs intra-prediction processing for a sub-block (block) of interest to be encoded by referring to an encoded region of the same input image to which the sub-block of interest belongs, thereby generating an intra-prediction image. In addition, the prediction unit 104 performs inter-prediction processing by referring to an encoded input image (for example, the input image of an immediately preceding frame) different from the input image to which the sub-block of interest to be encoded belongs, thereby generating an inter-prediction image. Then, the prediction unit 104 divides the sub-block of interest into two regions as shown in the above examples of Fig. 12, and arranges the intra-prediction image in one region and the inter-prediction image in the other region, thereby generating a mixed intra-inter prediction image. The prediction unit 104 derives the square sums (or the absolute value sums) of the differences between the pixel values of the positionally corresponding pixels of each of the three prediction images and the sub-block of interest, and decides the prediction mode of the prediction image for which the square sum is minimum as the prediction mode of the sub-block of interest. The prediction unit 104 generates a prediction image by performing prediction processing for the sub-block in accordance with the prediction mode, and derives the difference between the sub-block and the prediction image as prediction errors.

In step S307, for each sub-block, the transformation/quantization unit 105 performs orthogonal transformation of the prediction errors derived in step S306, thereby generating orthogonal transformation coefficients. Then, for each sub-block, the transformation/quantization unit 105 selects, based on the prediction information, one of the quantization matrices held by the quantization matrix holding unit 103, and quantizes the orthogonal transformation coefficients using the selected quantization matrix, thereby generating a quantization coefficient.

In step S308, for each sub-block, the inverse quantization/inverse transformation unit 106 generates reproduction orthogonal transformation coefficients by performing inverse quantization of the quantization coefficient generated in step S307 using the quantization matrix selected in step S307, and performs inverse orthogonal transformation of the reproduction orthogonal transformation coefficients after performing inverse quantization correction processing based on the inverse quantization correction control information, thereby generating (reproducing) the prediction errors. That is, the inverse quantization/inverse transformation unit 106 performs inverse quantization processing and inverse quantization correction processing for the reproduction orthogonal transformation coefficients in accordance with equation (1) above.

In step S309, for each sub-block, the image reproduction unit 107 generates a prediction image based on the prediction information output in step S306 by referring to the frame memory 108, and generates a reproduced image using the prediction image and the prediction errors generated in step S308.

In step S310, for each sub-block, the encoding unit 110 generates encoded data of each sub-block of the basic block by encoding the prediction information output in step S306 and the quantization coefficient generated in step S307. Then, the integrated encoding unit 111 generates a bit stream by multiplexing the header encoded data generated in step S304, the encoded data generated by the encoding unit 110, and the like.

In step S311, the control unit 150 determines whether all the basic blocks in the input image have been selected as selected basic blocks (that is, whether encoding (the processes of steps S306 to S310) of all the basic blocks is complete).

As a result of the determination, if all the basic blocks in the input image have been selected as selected basic blocks, the process advances to step S312.

If the basic block that has not been selected yet as a selected basic block remains in the input image, the process returns to step S306.

In step S312, the in-loop filter unit 109 reads out the reproduced image from the frame memory 108, performs in-loop filter processing of the reproduced image, and stores again the reproduced image applied with the in-loop filter processing in the frame memory 108.

With the above-described configuration and operation, particularly in step S308, the reproduction orthogonal transformation coefficients are corrected based on the inverse quantization correction control information. This makes it possible to perform appropriate correction of the reproduction orthogonal transformation coefficients generated by the inverse quantization processing using the quantization matrix and improve the compression efficiency.

Note that in this embodiment, reproduction orthogonal transformation coefficients are generated using a quantization matrix in the inverse quantization processing of all sub-blocks in the frame, and is corrected based on inverse quantization correction control information, but the present invention is not limited to this. For example, inverse quantization of a sub-block (for example, a sub-block having a size of 8 pixels × 8 pixels) in the frame may be performed using a quantization matrix and inverse quantization of another sub-block (for example, a sub-block having a size of 4 pixels × 4 pixels) may be performed without using a quantization matrix (that is, by using the same quantization scale for all frequency components). In this case, correction can be performed, for the sub-block having undergone inverse quantization using the quantization matrix, by equation (1) in accordance with the inverse quantization correction control information, and correction can always be performed, for the sub-block having undergone inverse quantization without using the quantization matrix, by equation (1) regardless of the inverse quantization correction control information. Thus, even if the sub-block having undergone inverse quantization using the quantization matrix and the sub-block having undergone inverse quantization without using the quantization matrix are mixed, each sub-block can appropriately be corrected, thereby improving the compression efficiency.

In this embodiment, the quantization correction control information is encoded and included in a bit stream, but the present invention is not limited to this. For example, by always setting the quantization correction control information to 0, the code of the quantization correction control information included in the bit stream can be omitted, as shown in Fig. 6B. In this case, a sub-block undergoing inverse quantization without using the quantization matrix always undergoes inverse quantization correction processing, and a sub-block undergoing inverse quantization using the quantization matrix never undergoes inverse quantization correction processing. This can simplify the relationship between whether to apply the quantization matrix and whether to apply inverse quantization correction processing to facilitate control, and reduce the code amount corresponding to the code of the inverse quantization correction control information.

In this embodiment, the inverse quantization correction control information indicates only whether to apply inverse quantization correction processing, but the value of the inverse quantization correction control information can be also set as the value of a parameter to be used for inverse quantization correction processing. For example, the value of the inverse quantization correction control information can be also set in Shift in the above-described equation (1) or a value of T in equation (2). This can control the intensity of inverse quantization correction in accordance with the characteristic of the image, thereby improving the compression efficiency.

In this embodiment, the three types of prediction methods, that is, intra-prediction, inter-prediction, and mixed intra-inter prediction are used. However, since the characteristics of the prediction and errors are different, it can be configured to perform different inverse quantization correction processing in accordance with the prediction method. For example, by individually setting inverse quantization correction control information corresponding to a sub-block using intra-prediction, inverse quantization correction control information corresponding to a sub-block using inter-prediction, and inverse quantization correction control information corresponding to a sub-block using mixed intra-inter prediction, it is also possible to apply inverse quantization correction control suitable for each prediction method. In this case, it may be configured to encode each piece of inverse quantization correction control information and include it in a bit stream, or set each piece of inverse quantization correction control information to a fixed value and omit encoding.

Note that in this embodiment, encoding processing of an image of each frame is performed to generate a bit stream and output it, but the target of the encoding processing is not limited to images. For example, a feature amount used for machine learning such as object recognition may be represented as two-dimensional array data, and the data may be set as an encoding target. This can efficiently encode the feature amount used for machine learning.

[Second Embodiment]

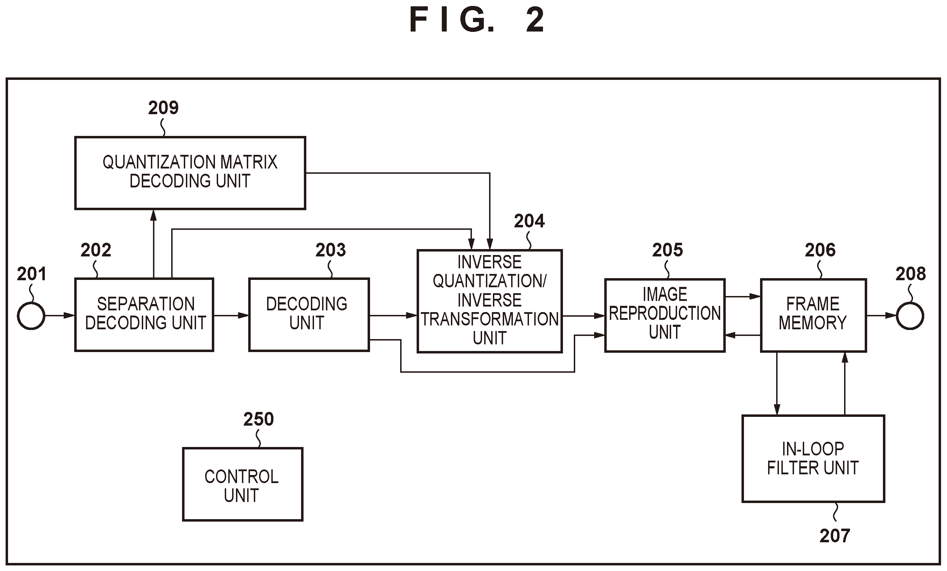

An image decoding apparatus according to this embodiment decodes a bit stream of each frame generated by the image encoding apparatus according to the first embodiment. An example of the functional configuration of the image decoding apparatus according to this embodiment will be described with reference to the block diagram of Fig. 2.

A separation decoding unit 202 acquires a bit stream via an input unit 201. The method for the separation decoding unit 202 to acquire a bit stream is not limited to a specific one. For example, the separation decoding unit 202 may acquire a bit stream held in an external apparatus such as a server apparatus via a network, or acquire a bit stream generated by an image capturing apparatus from the image capturing apparatus. Then, the separation decoding unit 202 separates, from the bit stream, header encoded data and encoded data of each sub-block of a basic block. In short, the separation decoding unit 202 performs an operation reverse to that of the integrated encoding unit 111 shown in Fig. 1. Furthermore, the separation decoding unit 202 extracts inverse quantization correction control information from the header encoded data.

A quantization matrix decoding unit 209 decodes the header encoded data separated by the separation decoding unit 202 and reproduces a quantization matrix. A decoding unit 203 decodes the encoded data of each sub-block of the basic block separated by the separation decoding unit 202 and reproduces a quantization coefficient and prediction information.

An inverse quantization/inverse transformation unit 204 performs, using the quantization matrix reproduced by the quantization matrix decoding unit 209, inverse quantization of the quantization coefficient reproduced by the decoding unit 203 like the inverse quantization/inverse transformation unit 106, thereby generating reproduction orthogonal transformation coefficients. Then, like the inverse quantization/inverse transformation unit 106, the inverse quantization/inverse transformation unit 204 performs inverse orthogonal transformation of the reproduction orthogonal transformation coefficients after performing inverse quantization correction processing based on the inverse quantization correction control information extracted by the separation decoding unit 202, thereby generating (reproducing or deriving) prediction errors.

Like the image reproduction unit 107, an image reproduction unit 205 generates a prediction image based on the prediction information reproduced by the decoding unit 203 by appropriately referring to a frame memory 206. Then, like the image reproduction unit 107, the image reproduction unit 205 generates a reproduced image by adding the prediction errors reproduced by the inverse quantization/inverse transformation unit 204 to the prediction image, and stores the reproduced image in the frame memory 206.

Like the in-loop filter unit 109, an in-loop filter unit 207 reads out the reproduced image from the frame memory 206, performs in-loop filter processing of the reproduced image, and stores again the reproduced image to which the in-loop filter processing is applied in the frame memory 206. The reproduced image to which the in-loop filter processing is applied by the in-loop filter unit 207 is output to an external apparatus via an output unit 208 under the control of a control unit 250.

The output destination of the reproduced image is not limited to a specific one. For example, the control unit 250 may transmit the reproduced image to an external apparatus via a network, or output the reproduced image to a display device connected to the image decoding apparatus and display the reproduced image on the display device. The control unit 250 controls the operation of the entire image decoding apparatus including the above-described function units.

The operation of the image decoding apparatus in the functional configuration shown in Fig. 2 will be described next. A bit stream of one frame input via the input unit 201 is input to the separation decoding unit 202. The separation decoding unit 202 according to this embodiment extracts inverse quantization correction control information from the sequence header of a bit stream shown in Fig. 6A, and extracts encoded data of quantization matrices shown in Figs. 8A to 8C from the sequence header. In addition, the separation decoding unit 202 reproduces encoded data of each sub-block of the basic block of picture data.

The quantization matrix decoding unit 209 decodes the encoded data of the quantization matrices, thereby reproducing one-dimensional difference matrices shown in Figs. 10A to 10C. Similar to the first embodiment, this embodiment assumes that decoding is performed using an encoding table shown in Fig. 11A (or 11B), but the encoding table is not limited to this, and another encoding table may be used as long as the same thing as in the first embodiment is used. Then, the quantization matrix decoding unit 209 inversely scans the reproduced one-dimensional difference matrix, thereby reproducing the quantization matrix as a two-dimensional array. That is, the quantization matrix decoding unit 209 performs an operation reverse to that of the quantization matrix encoding unit 113. That is, the quantization matrix decoding unit 209, the difference matrices shown in Figs. 10A to 10C, uses the scanning method shown in Fig. 9, thereby reproducing the three types of quantization matrices shown in Figs. 8A to 8C, respectively.

The decoding unit 203 decodes the encoded data of each sub-block of the basic block, thereby reproducing a quantization coefficient and prediction information. The inverse quantization/inverse transformation unit 204 selects one of the quantization matrices reproduced by the quantization matrix decoding unit 209, and performs inverse quantization of the quantization coefficient reproduced by the decoding unit 203 using the selected quantization matrix, thereby generating reproduction orthogonal transformation coefficients. Then, like the inverse quantization/inverse transformation unit 106, the inverse quantization/inverse transformation unit 204 performs inverse orthogonal transformation of the generated reproduction orthogonal transformation coefficients after performing inverse quantization correction processing based on the inverse quantization correction control information extracted by the separation decoding unit 202, thereby generating (reproducing) prediction errors.

The inverse quantization/inverse transformation unit 204 according to this embodiment decides the quantization matrix to be used in inverse quantization processing in accordance with the prediction mode of the decoding target sub-block determined in accordance with the prediction information reproduced by the decoding unit 203. That is, the quantization matrix shown in Fig. 8A is selected for the sub-block using intra-prediction, the quantization matrix shown in Fig. 8B is selected for the sub-block using inter-prediction, and the quantization matrix shown in Fig. 8C is selected for the sub-block using mixed intra-inter prediction. However, the quantization matrix to be used is not limited to these, and the same quantization matrix as that used by the transformation/quantization unit 105 and the inverse quantization/inverse transformation unit 106 of the first embodiment is used.

Like the image reproduction unit 107, the image reproduction unit 205 generates a prediction image based on the prediction information reproduced by the decoding unit 203 by appropriately referring to the frame memory 206. In this embodiment, like the prediction unit 104, the three types of prediction methods, that is, intra-prediction, inter-prediction, and mixed intra-inter prediction are used. Then, like the image reproduction unit 107, the image reproduction unit 205 generates a reproduced image by adding the prediction errors reproduced by the inverse quantization/inverse transformation unit 204 to the prediction image, and stores the reproduced image in the frame memory 206. The stored reproduced image is a prediction reference candidate when decoding other sub-blocks.

Like the in-loop filter unit 109, the in-loop filter unit 207 performs in-loop filter processing of the reproduced image stored in the frame memory 206. As described above, the reproduced image applied with the in-loop filter processing by the in-loop filter unit 207 is output to an external apparatus via the output unit 208.

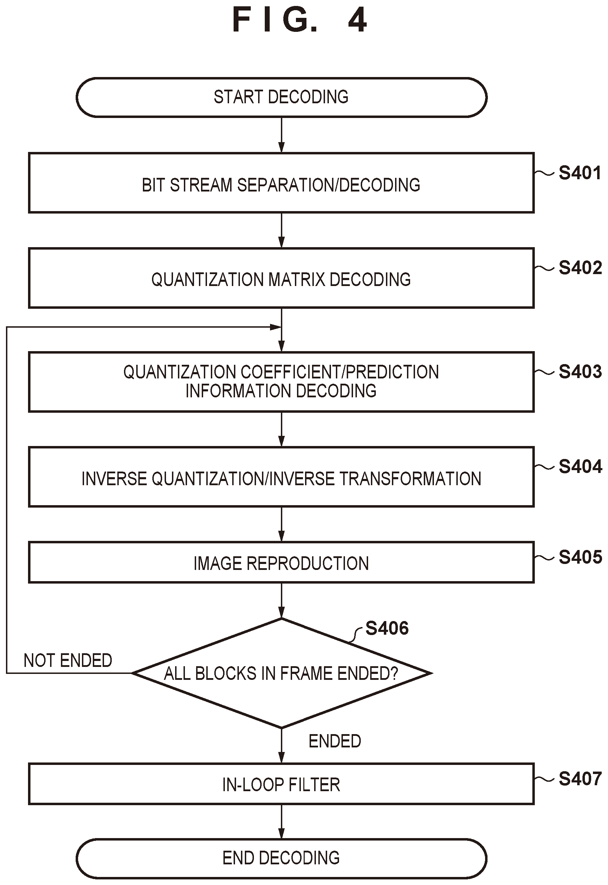

Next, processing performed by the image decoding apparatus to decode a bit stream of one frame will be described with reference to the flowchart of Fig. 4. When decoding bit streams of a plurality of frames, the image decoding apparatus performs, for the bit stream of each frame, the processing according to the flowchart of Fig. 4.

In step S401, the separation decoding unit 202 extracts (decodes) inverse quantization correction control information from a bit stream, and reproduces (separates) the encoded data of the quantization matrices and the encoded data of each sub-block of the basic block from the bit stream.

In step S402, the quantization matrix decoding unit 209 reproduces one-dimensional difference matrices by decoding the encoded data of the quantization matrices reproduced in step S401, and reproduces the quantization matrices as two-dimensional arrays by inversely scanning the reproduced one-dimensional difference matrices.

In step S403, the decoding unit 203 decodes the encoded data of each sub-block of the basic block reproduced in step S401, thereby reproducing a quantization coefficient and prediction information. In step S404, the inverse quantization/inverse transformation unit 204 selects one of the quantization matrices reproduced in step S402, and performs inverse quantization of the quantization coefficient reproduced in step S403 using the selected quantization matrix, thereby generating reproduction orthogonal transformation coefficients. Then, the inverse quantization/inverse transformation unit 204 performs inverse orthogonal transformation of the reproduction orthogonal transformation coefficients after performing inverse quantization correction processing based on the inverse quantization correction control information extracted in step S401, thereby generating (reproducing) prediction errors.

In step S405, the image reproduction unit 205 generates a prediction image based on the prediction information reproduced in step S403 by appropriately referring to the frame memory 206. Then, the image reproduction unit 205 generates a reproduced image by adding the prediction errors reproduced in step S404 to the prediction image, and stores the reproduced image in the frame memory 206.

In step S406, the control unit 250 determines whether the processes of steps S403 to S405 have been performed for all the basic blocks. As a result of the determination, if the processes of steps S403 to S405 have been performed for all the basic blocks, the process advances to step S407. On the other hand, if the basic block for which the processes of steps S403 to S405 have not been performed remains, the process returns to step S403 to perform the processes of steps S403 to S405 for the basic block. In step S407, the in-loop filter unit 207 performs in-loop filter processing for the reproduced image stored in the frame memory 206.

With the above-described configuration and operation, by correcting the reproduction orthogonal transformation coefficients based on the inverse quantization correction control information, it is possible to appropriately correct the reproduction orthogonal transformation coefficients generated by the inverse quantization processing using the quantization matrix, and decode the bit stream with improved compression efficiency.

Note that in this embodiment as well, similar to the first embodiment, reproduction orthogonal transformation coefficients are generated by using the quantization matrix in the inverse quantization processing of all the sub-blocks in the frame and is corrected based on the inverse quantization correction control information, but the present invention is not limited to this. For example, in this embodiment as well, similar to the first embodiment, it is possible to perform, by equation (1) in accordance with the inverse quantization correction control information, correction of the sub-block having undergone inverse quantization using the quantization matrix, and always perform, by equation (1) regardless of the inverse quantization correction control information, correction of the sub-block having undergone inverse quantization without using the quantization matrix. Thus, even if the sub-block having undergone inverse quantization using the quantization matrix and the sub-block having undergone inverse quantization without using the quantization matrix are mixed, each sub-block can appropriately be corrected, thereby decoding the bit stream with improved compression efficiency.

In this embodiment, the bit stream in which the quantization correction control information is encoded is decoded, but the present invention is not limited to this. For example, by always setting the value of the quantization correction control information to 0, it is possible to decode a bit stream in which the code of the quantization correction control information is omitted, as shown in Fig. 6B. In this case, similar to the first embodiment, a sub-block undergoing inverse quantization without using the quantization matrix always undergoes inverse quantization correction processing, and a sub-block undergoing inverse quantization using the quantization matrix never undergoes inverse quantization correction processing. This can simplify the relationship between whether to apply the quantization matrix and whether to apply inverse quantization correction processing to facilitate control, and decode the bit stream in which the code amount corresponding to the code of the inverse quantization correction control information is reduced.

Note that in this embodiment as well, similar to the first embodiment, a parameter used in the inverse quantization correction processing can be also used as inverse quantization correction control information. This can control the intensity of inverse quantization correction in accordance with the characteristic of the image, thereby decoding the bit stream with improved compression efficiency.

In this embodiment as well, similar to the first embodiment, it can be also configured to perform different inverse quantization correction processing in accordance with the prediction method. In this case, similar to the first embodiment, it may be also configured to decode the bit stream in which each piece of inverse quantization correction control information is encoded, or set each piece of inverse quantization correction control information to a fixed value and omit decoding.

Note that in this embodiment, a bit stream of each frame is decoded, but the target of the decoding processing is not limited to a bit stream obtained by encoding an image. For example, a feature amount used for machine learning such as object recognition may be represented as two-dimensional array data, and a bit stream generated by encoding the data may be decoded. This can decode the bit stream generated by efficiently encoding the feature amount used for machine learning.

[Third Embodiment]

The first embodiment assumes that the function units shown in Fig. 1 are implemented by hardware. However, the function units except for the frame memory 108 may be implemented by software (computer programs). In this case, a computer apparatus capable of executing the software can be applied to the image encoding apparatus.

The second embodiment assumes that the function units shown in Fig. 2 are implemented by hardware. However, the function units except for the frame memory 206 may be implemented by software (computer programs). In this case, a computer apparatus capable of executing the software can be applied to the image decoding apparatus.

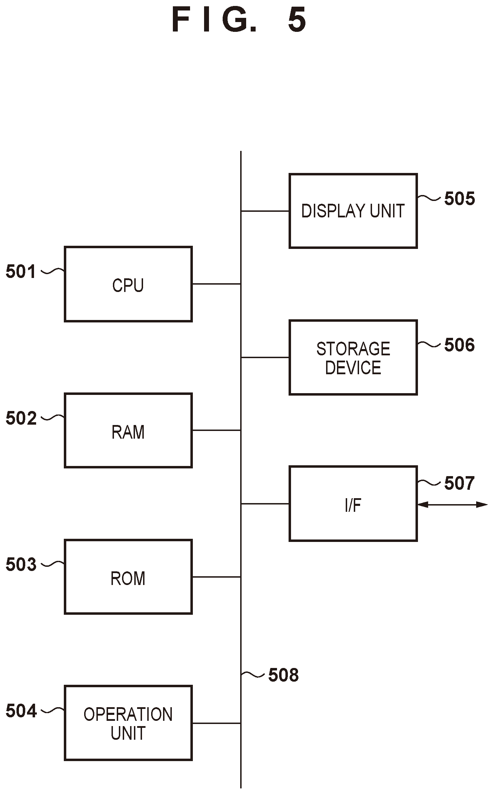

An example of the hardware configuration of the computer apparatus applicable to the image encoding apparatus and the image decoding apparatus will be described with reference to the block diagram of Fig. 5. Note that the configuration shown in Fig. 5 is merely an example of the hardware configuration of the computer apparatus applicable to the image encoding apparatus and the image decoding apparatus, and can appropriately be changed/modified. Computer apparatuses having different configurations may be applied to the image encoding apparatus and the image decoding apparatus. Alternatively, the image encoding apparatus and the image decoding apparatus may be implemented by the same apparatus.

A CPU 501 executes various kinds of processing using computer programs and data stored in a RAM 502 or a ROM 503. Thus, the CPU 501 controls the operation of the entire computer apparatus, and executes or controls various kinds of processing described as processing executed by the image encoding apparatus or the image decoding apparatus.

The RAM 502 has an area configured to store computer programs and data loaded from the ROM 503 or a storage device 506, and an area configured to store computer programs and data received from the outside via an I/F 507. The RAM 502 further has a work area used by the CPU 501 when executing various kinds of processing. The RAM 502 can thus appropriately provide various kinds of areas.

The ROM 503 stores setting data of the computer apparatus, computer programs and data associated with activation of the computer apparatus, computer programs and data associated with the basic operation of the computer apparatus, and the like.

An operation unit 504 is a user interface such as a keyboard, a mouse, or a touch panel screen, and a user can input various kinds of instructions and information to the computer apparatus by operating the operation unit 504.

A display unit 505 includes a liquid crystal screen or a touch panel screen, and can display a processing result by the CPU 501 as an image, characters, or the like. The display unit 505 may be a projection device such as a projector that projects an image or characters.

The storage device 506 is a nonvolatile memory device such as a hard disk drive. In the storage device 506, an OS (Operating System), computer programs and data used to cause the CPU 501 to execute or control the various kinds of processing described as processing executed by the image encoding apparatus or the image decoding apparatus, and the like are stored.

The computer programs stored in the storage device 506 include computer programs used to cause the CPU 501 to execute or control the various kinds of processing described as processing executed by the function units (except for the frame memory 108) shown in Fig. 1. In addition, the computer programs stored in the storage device 506 include computer programs used to cause the CPU 501 to execute or control the various kinds of processing described as processing executed by the function units (except for the frame memory 206 ) shown in Fig. 2. Note that the frame memories 108 and 206 can be implemented using the RAM 502 and the storage device 506.

The I/F 507 is a communication interface for performing data communication with an external apparatus. For example, by performing data communication with an image capturing apparatus or a server apparatus via the I/F 507, the computer apparatus can acquire an input image or a bit stream from the image capturing apparatus or the server apparatus and transmit a bit stream to the server apparatus.

All of the CPU 501, the RAM 502, the ROM 503, the operation unit 504, the display unit 505, the storage device 506, and the I/F 507 are connected to a system bus 508. In this configuration, when the computer apparatus is powered on, the CPU 501 executes a boot program stored in the ROM 503, loads the OS stored in the storage device 506 into the RAM 502, and activates the OS. As a result, the computer apparatus can perform communication via the I/F 507. Under the control of the OS, the CPU 501 loads an application (corresponding to Fig. 3) associated with encoding of an image from the storage device 506 into the RAM 502 and executes it, and thus the computer apparatus functions as the image encoding apparatus. On the other hand, when the CPU 501 loads an application (corresponding to Fig. 4) associated with decoding of an image from the storage device 506 into the RAM 502 and executes it, the computer apparatus functions as the image decoding apparatus.

The numerical values, processing timings, processing orders, the main constituent of processing, the structures/acquisition methods/transmission destinations/transmission sources/storage locations of data (information), and the like used in the above-described embodiments are merely examples used to make a detailed description, and it is not intended to limit to these examples.

Some or all of the above-described embodiments may appropriately be combined and used. In addition, some or all of the above-described embodiments may selectively be used.

(Other embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-168873 filed September 28, 2023, which is hereby incorporated by reference herein.

**Claims**

1. An image encoding apparatus for encoding an image on a block basis, **characterized by** comprising:

   prediction means for generating a prediction image from encoded pixels for a block of interest having a predetermined size as an encoding target in an image, and deriving prediction errors that are a difference between the block of interest and the prediction image;
   transformation means for frequency-transforming the prediction errors derived by the prediction means;
   quantization means for quantizing orthogonal transformation coefficients obtained by the frequency transformation by the transformation means;
   encoding means for entropy-encoding the orthogonal transformation coefficients quantized by the quantization means; and
   inverse quantization means for generating reproduction orthogonal transformation coefficients by inversely quantizing the orthogonal transformation coefficients quantized by the quantization means,
   wherein the inverse quantization means corrects the reproduction orthogonal transformation coefficients.

2. The image encoding apparatus according to claim 1, **characterized in that** the inverse quantization means controls to correct the reproduction orthogonal transformation coefficients in a case of performing inverse quantization without using a quantization matrix and not to correct the reproduction orthogonal transformation coefficients in a case of performing inverse quantization using a quantization matrix.

3. The image encoding apparatus according to claim 1 or 2, **characterized in that** the encoding means further encodes inverse quantization correction control information for controlling correction processing by the inverse quantization means.

4. The image encoding apparatus according to any one of claims 1 to 3, **characterized in that** the inverse quantization means performs different correction for the reproduction orthogonal transformation coefficients in accordance with a prediction image generation method by the prediction means.

5. An image decoding apparatus for decoding an image on a block basis, **characterized by** comprising:

decoding means for decoding quantized orthogonal transformation coefficients;
inverse quantization means for inversely quantizing the quantized orthogonal transformation coefficients to generate reproduction orthogonal transformation coefficients;
inverse transformation means for inversely transforming the reproduction orthogonal transformation coefficients to derive prediction errors; and
prediction means for generating a prediction image and decoding a block of interest using the prediction image and the prediction errors,
wherein the inverse quantization means corrects the reproduction orthogonal transformation coefficients.

6. The image decoding apparatus according to claim 5, **characterized in that** the inverse quantization means controls to correct the reproduction orthogonal transformation coefficients in a case of performing inverse quantization without using a quantization matrix and not to correct the reproduction orthogonal transformation coefficients in a case of performing inverse quantization using a quantization matrix.

7. The image decoding apparatus according to claim 5 or 6, **characterized in that** the decoding means further decodes inverse quantization correction control information for controlling correction processing by the inverse quantization means.

8. The image decoding apparatus according to any one of claims 5 to 7, **characterized in that** the inverse quantization means performs different correction for the reproduction orthogonal transformation coefficients in accordance with a prediction image generation method by the prediction means.

9. An image encoding method performed by an image encoding apparatus for encoding an image on a block basis, **characterized by** comprising:

a prediction step of, by prediction means of the image encoding apparatus, generating a prediction image from encoded pixels for a block of interest having a predetermined size as an encoding target in an image, and deriving prediction errors that are a difference between the block of interest and the prediction image;
a transformation step of, by transformation means of the image encoding apparatus, frequency-transforming the prediction errors derived in the prediction step;
a quantization step of, by quantization means of the image encoding apparatus, quantizing orthogonal transformation coefficients obtained by the frequency transformation in the transformation step;
an encoding step of, by encoding means of the image encoding apparatus, entropy-encoding the orthogonal transformation coefficients quantized in the quantization step; and
an inverse quantization step of, by inverse quantization means of the image encoding apparatus, generating reproduction orthogonal transformation coefficients by inversely quantizing the orthogonal transformation coefficients quantized in the quantization step,
wherein in the inverse quantization step, the reproduction orthogonal transformation coefficients are corrected.

10. An image decoding method performed by an image decoding apparatus for decoding an image on a block basis, **characterized by** comprising;

a decoding step of, by decoding means of the image decoding apparatus, decoding quantized orthogonal transformation coefficients;
an inverse quantization step of, by inverse quantization means of the image decoding apparatus, inversely quantizing the quantized orthogonal transformation coefficients to generate reproduction orthogonal transformation coefficients;
an inverse transformation step of, by inverse transformation means of the image decoding apparatus, inversely transforming the reproduction orthogonal transformation coefficients to derive prediction errors; and
a prediction step of, by prediction means of the image decoding apparatus, generating a prediction image and decoding a block of interest using the prediction image and the prediction errors,
wherein in the inverse quantization step, the reproduction orthogonal transformation coefficients are corrected.

11. A computer program configured to cause a computer of an image encoding apparatus for encoding an image on a block basis to function as each means of an image encoding apparatus defined in any one of claims 1 to 4.

12. A computer program configured to cause a computer of an image decoding apparatus for decoding an image on a block basis to function as each means of an image decoding apparatus defined in any one of claims 5 to 8.

# FIG. 1

EP 4 787 838 A1

# FIG. 2

START ENCODING

INVERSE QUANTIZATION CORRECTION CONTROL INFORMATION ACQUISITION ～ S301

QUANTIZATION MATRIX GENERATION ～ S302

QUANTIZATION MATRIX ENCODING ～ S303

HEADER ENCODED DATA GENERATION ～ S304

BLOCK DIVISION ～ S305

PREDICTION ～ S306

TRANSFORMATION/QUANTIZATION ～ S307

INVERSE QUANTIZATION/INVERSE TRANSFORMATION ～ S308

IMAGE REPRODUCTION ～ S309

QUANTIZATION COEFFICIENT/PREDICTION INFORMATION ENCODING ～ S310

S311

NOT ENDED ← ALL BLOCKS IN FRAME ENDED?

ENDED

IN-LOOP FILTER ～ S312

END ENCODING

F I G. 3

# FIG. 4

```
            ┌─────────────────────────────────┐
            │          START DECODING          │
            └─────────────────────────────────┘
                            │
                            ▼
       ┌─────────────────────────────────────────┐
       │       BIT STREAM SEPARATION/DECODING      │────── S401
       └─────────────────────────────────────────┘
                            │
                            ▼
       ┌─────────────────────────────────────────┐
       │        QUANTIZATION MATRIX DECODING        │────── S402
       └─────────────────────────────────────────┘
                            │
                            ▼
       ┌─────────────────────────────────────────┐
       │   QUANTIZATION COEFFICIENT/PREDICTION      │────── S403
       │          INFORMATION DECODING              │
       └─────────────────────────────────────────┘
                            │
                            ▼
       ┌─────────────────────────────────────────┐
       │  INVERSE QUANTIZATION/INVERSE TRANSFORMATION│────── S404
       └─────────────────────────────────────────┘
                            │
                            ▼
       ┌─────────────────────────────────────────┐
       │            IMAGE REPRODUCTION              │────── S405
       └─────────────────────────────────────────┘
                            │
                            ▼
                                            S406
NOT ENDED          ◇ ALL BLOCKS IN FRAME ENDED? ◇
                            │
                         ENDED
                            ▼
       ┌─────────────────────────────────────────┐
       │              IN-LOOP FILTER                │────── S407
       └─────────────────────────────────────────┘
                            │
                            ▼
            ┌─────────────────────────────────┐
            │           END DECODING            │
            └─────────────────────────────────┘
```

# F I G. 5

501 — CPU

502 — RAM

503 — ROM

504 — OPERATION UNIT

505 — DISPLAY UNIT

506 — STORAGE DEVICE

507 — I/F

508

F I G. 6A

F I G. 6B

700

F I G. 7A

700

F I G. 7B

700

F I G. 7C

FIG. 7D

700

FIG. 7E

700

FIG. 7F

700

F I G.  8A

| | | | | | | | |
|---|---|---|---|---|---|---|---|
| 6 | 10 | 13 | 16 | 18 | 23 | 25 | 27 |
| 10 | 11 | 16 | 18 | 23 | 25 | 27 | 29 |
| 13 | 16 | 18 | 23 | 25 | 27 | 29 | 31 |
| 16 | 18 | 23 | 25 | 27 | 29 | 31 | 33 |
| 18 | 23 | 25 | 27 | 29 | 31 | 33 | 36 |
| 23 | 25 | 27 | 29 | 31 | 33 | 36 | 38 |
| 25 | 27 | 29 | 31 | 33 | 36 | 38 | 40 |
| 27 | 29 | 31 | 33 | 36 | 38 | 40 | 42 |

~ 800

F I G.  8B

| | | | | | | | |
|---|---|---|---|---|---|---|---|
| 9 | 13 | 15 | 17 | 19 | 21 | 22 | 24 |
| 13 | 13 | 17 | 19 | 21 | 22 | 24 | 25 |
| 15 | 17 | 19 | 21 | 22 | 24 | 25 | 27 |
| 17 | 19 | 21 | 22 | 24 | 25 | 27 | 28 |
| 19 | 21 | 22 | 24 | 25 | 27 | 28 | 30 |
| 21 | 22 | 24 | 25 | 27 | 28 | 30 | 32 |
| 22 | 24 | 25 | 27 | 28 | 30 | 32 | 33 |
| 24 | 25 | 27 | 28 | 30 | 32 | 33 | 35 |

~ 800

F I G.  8C

| | | | | | | | |
|---|---|---|---|---|---|---|---|
| 8 | 11 | 14 | 17 | 19 | 22 | 24 | 26 |
| 11 | 12 | 17 | 19 | 22 | 24 | 26 | 27 |
| 14 | 17 | 19 | 22 | 24 | 26 | 27 | 29 |
| 17 | 19 | 22 | 24 | 26 | 27 | 29 | 31 |
| 19 | 22 | 24 | 26 | 27 | 29 | 31 | 33 |
| 22 | 24 | 26 | 27 | 29 | 31 | 33 | 35 |
| 24 | 26 | 27 | 29 | 31 | 33 | 35 | 37 |
| 26 | 27 | 29 | 31 | 33 | 35 | 37 | 39 |

~ 800

# F I G. 9

# F I G. 10A

1000

| -2 | 4 | 0 | 3 | -2 | 2 | 3 | 0 | 0 | 0 | 2 | 0 | 0 | 0 | 0 | ... |

# F I G. 10B

1000

| 1 | 4 | 0 | 2 | -2 | 2 | 2 | 0 | 0 | 0 | 2 | 0 | 0 | 0 | 0 | ... |

# F I G. 10C

1000

| 0 | 3 | 0 | 3 | -2 | 2 | 3 | 0 | 0 | 0 | 2 | 0 | 0 | 0 | 0 | ... |

FIG. 11A

| ENCODING TARGET VALUE | BINARY CODE |
|---|---|
| ... | ... |
| -5 | 0001011 |
| -4 | 0001001 |
| -3 | 00111 |
| -2 | 00101 |
| -1 | 011 |
| 0 | 1 |
| 1 | 010 |
| 2 | 00100 |
| 3 | 000110 |
| 4 | 0001000 |
| 5 | 0001010 |
| ... | ... |

FIG. 11B

| ENCODING TARGET VALUE | BINARY CODE |
|---|---|
| ... | ... |
| -5 | 0001011 |
| -4 | 0001001 |
| -3 | 00111 |
| -2 | 0010 |
| -1 | 011 |
| 0 | 11 |
| 1 | 10 |
| 2 | 010 |
| 3 | 00110 |
| 4 | 0001000 |
| 5 | 0001010 |
| ... | ... |

# F I G. 12A

1200

# F I G. 12B

1200

## INTERNATIONAL SEARCH REPORT

| International application No. |
|---|
| **PCT/JP2024/028745** |

**A. CLASSIFICATION OF SUBJECT MATTER**

*H04N 19/124*(2014.01)i; *H04N 19/176*(2014.01)i; *H04N 19/463*(2014.01)i
FI: H04N19/124; H04N19/463; H04N19/176

According to International Patent Classification (IPC) or to both national classification and IPC

**B. FIELDS SEARCHED**

Minimum documentation searched (classification system followed by classification symbols)

H04N19/124; H04N19/176; H04N19/463

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-251672 A (RICOH COMPANY, LTD.) 27 September 2007 (2007-09-27) | 5, 10, 12 |
| | paragraphs [0041], [0072]-[0074], [0105]-[0113], fig. 8, 15 | |
| A | | 1-4, 6-9, 11 |
| A | JP 2012-124837 A (SONY CORPORATION) 28 June 2012 (2012-06-28) | 1-12 |
| | paragraph [0036], fig. 2, 13-14 | |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/028745**

| Patent document cited in search report | | | Publication date (day/month/year) | Patent family member(s) | Publication date (day/month/year) |
|---|---|---|---|---|---|
| JP | 2007-251672 | A | 27 September 2007 | (Family: none) | |
| JP | 2012-124837 | A | 28 June 2012 | (Family: none) | |

Form PCT/ISA/210 (patent family annex) (July 2022)

**EP 4 787 838 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013038758 A
- JP 2023168873 A